# EUROPÄISCHE PATENTSCHRIFT

(11) **EP 1 488 581 B1**
(45) Veröffentlichungstag und Bekanntmachung des Hinweises auf die Patenterteilung: **17.08.2005**
(21) Anmeldenummer: 03735637.5
(22) Anmeldetag: 17.06.2003
(51) Int. Cl.: H04L 12/56, H04Q 7/38

(54) **VERFAHREN ZUR ÜBERTRAGUNG VON DATENPAKETEN IN EINEM MOBILFUNKSYSTEM UND ENTSPRECHENDES MOBILFUNKSYSTEM**
METHOD FOR THE TRANSMISSION OF DATA PACKETS IN A MOBILE RADIO SYSTEM AND CORRESPONDING MOBILE RADIO SYSTEM
PROCEDE DE TRANSMISSION DE PAQUETS DE DONNEES DANS UN SYSTEME RADIO MOBILE ET SYSTEME RADIO MOBILE CORRESPONDANT

(30) Priorität: 05.07.2002 DE 10230400; 05.07.2002 EP 02015083
(43) Veröffentlichungstag der Anmeldung: 22.12.2004
(73) Patentinhaber: SIEMENS AKTIENGESELLSCHAFT, 80333 München (DE)
(72) Erfinder: RAJI, Fariba, A-1200 Wien (AT); WEGNER, Frank, 13407 Berlin (DE)
(86) Internationale Anmeldenummer: PCT/EP2003/006394
(87) Internationale Veröffentlichungsnummer: WO 2004/006515

(56) Entgegenhaltungen:
- EP-A- 0 777 396
- EP-A- 1 124 398
- WO-A-02/03626
- DE-A- 10 017 062
- US-A1- 2001 012 279
- US-A1- 2002 065 064

## Beschreibung

Die Erfindung betrifft ein Verfahren zur Übertragung von Datenpaketen in einem Mobilfunksystem, sowie ein entsprechendes Mobilfunksystem.

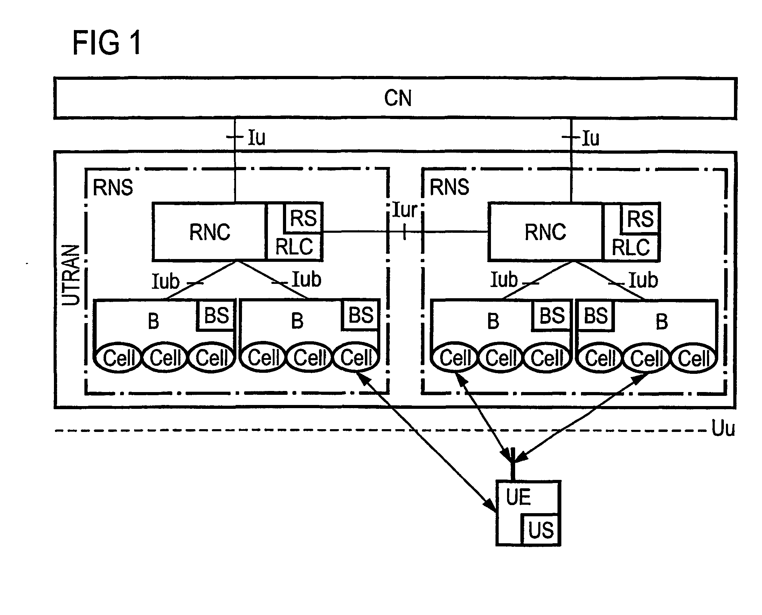

In Mobilfunksystemen wie dem GSM (Global System for Mobile communications) und dem UMTS (Universal Mobile Telecommunications System) werden Daten und Datenpakete aus dem Festnetz mittels Sendestationen über eine Luftschnittstelle zu Empfangsstationen übertragen. In Figur 1 ist ein herkömmliches UMTS schematisch und vereinfacht dargestellt. Das Festnetz CN ist mittels Datenleitungen Iu mit dem UTRAN (Universal Terrestrial Radio Access Network) verbunden. Das UTRAN besteht aus mehreren Subsystemen RNS (Radio Network Subsystem), die jeweils eine Datenleitung Iu zum Festnetz CN haben. Angeschlossen an jede Datenleitungen Iu ist immer ein Kontroller RNC (Radio Network Controller), der wiederum durch Verbindungen Iub mit mehreren Basisstationen B verbunden ist. Jeder Basisstation B können (z. B. über Sektorantennen) mehrere Zellen (cell) des Mobilfunksystems zugeordnet sein. Die Schnittstelle zwischen UTRAN und dem Teilnehmergerät UE (user equipment), das bei GSM als Mobilstation bezeichnet wird, erfolgt über die Schnittstelle Uu mittels einer Funkverbindung. Die Kontroller RNC verschiedener Subsysteme RNS sind in der Regel durch eine weitere Schnittstelle Iur verbunden. Diese weitere Schnittstelle Iur wird u.a. für einen sogenannten Handover (Zellwechsel) benötigt.

Während eines Soft-Handover ist das Teilnehmergerät UE mit wenigstens zwei Basisstationen B gleichzeitig verbunden, die jeweils unterschiedlichen Kontrollern RNC zuzuordnen sein können. Da zum Datenaustausch zwischen Teilnehmergerät UE und Festnetz CN lediglich eine Verbindung Iu benötigt wird, wird der Datenfluß von nur einem, SRNC (Serving RNC) genannten, Kontroller RNC kontrolliert. Sind die beiden Basisstationen B verschiedenen Kontrollern RNC zuzuordnen, ist also nur einer der Kontroller RNC der SRNC, während der zweite Kontroller als DRNC (Drift RNC) bezeichnet wird. Der DRNC genannte Kontroller wickelt seine Datenübertragung von und zum Festnetz CN über die weitere Schnittstelle Iur und somit über den Kontroller SRNC ab.

In jedem Kontroller RNC erfolgt eine Verbindungskontrolle RLC (Radio Link Control) mit Hilfe eines Speichers RS, in dem außer den Datenpaketen gespeichert wird, welche Daten gesendet wurden, erneut zu senden sind oder noch gesendet werden müssen. Bei einem Soft-Handover wird diese Statusinformation der Datenübertragung jedoch nur im Kontroller SRNC gespeichert. Über einen ähnlichen Speicher US für Statusinformationen und Datenpaktete verfügt auch das Teilnehmergerät UE, das Informationen darüber speichert, welche Daten es erfolgreich decodiert hat und für welche Daten es eine erneute Übertragung anfordert. Bei erfolgreicher Dekodierung der Daten sendet das Teilnehmergerät UE eine Bestätigung ACK (acknowledge) an die Verbindungskontrolle RLC des zuständigen Kontrollers RNC. Ist die Dekodierung nicht erfolgreich, wird stattdessen ein NACK (non acknowledge) gesendet.

Während beim Soft-Handover gleichzeitig eine Verbindung des Teilnehmergerätes UE zu wenigstens zwei Basisstationen B besteht, wird beim Hard-Handover die Verbindung von einer Basisstation B erst an eine andere Basisstation B übergeben, wenn die Verbindung zur ersten Basisstation B zuvor beendet wurde. Ebenso wie beim Soft-Handover, kann diese Verbindungsübergabe sowohl zwischen Basisstationen B ein und desselben Kontrollers RNC erfolgen als auch zwischen Basisstationen B verschiedener Kontroller RNC. Allerdings muß nach einem Hard-Handover ein Abgleich der gespeicherten Statusinformation der Datenübertragung zwischen dem Teilnehmergerät UE und dem zuständigen Kontroller RNC erfolgen und gegebenenfalls muß der Speicherinhalt des alten Kontrollers RNC an den neuen Kontroller RNC übertragen werden. Dieser Abgleich der Statusinformation der Datenübertragung kostet Zeit und verzögert die Wiederaufnahme der Datenübertragung nach einem Hard-Handover. Hohe Datenraten sind daher so nicht zu erreichen.

Gleiches gilt bezüglich der Datenrate bei einer schnellen Auswahl der Funkzelle, mit der das Teilnehmergerät UE eine Verbindung betreiben möchte. Das Teilnehmergerät UE hat einen Satz von möglichen Funkzellen zur Auswahl, über die es die Verbindung zum Festnetz CN führen kann. Das Teilnehmergerät UE bestimmt nun die Funkzelle mit den besten Eigenschaften und signalisiert in Aufwärtsrichtung (Uplink), von welcher Zelle es versorgt werden möchte. Dieses Prinzip wird Fast Cell Selection (FCS) genannt. Ändert sich die gewählte Zelle während einer Verbindung, so tritt bei FCS das gleiche Problem auf wie bei einem Hard-Handover. Der Abgleich der gespeicherten Statusinformation der Datenübertragung muß auch bei FCS wie im vorigen Absatz beschrieben erfolgen. Hohe Datenraten sind deshalb auch bei FCS so nicht möglich.

Zukünftige mobile Kommunikationssysteme werden jedoch hohe Datenraten benötigen und unterstützen müssen. Ein Beispiel hierfür ist High Speed Downlink Packet Access (HSDPA) das zur Zeit vom 3rd Generation Partnership Project (3GPP) für UTRA FDD und TDD (Universal Terrestrial Radio Access Frequency Division Duplex und Time Division Duplex) diskutiert wird. Um hohe Datenraten zu erreichen, wird die Steuerung der Datenübertragung vom Kontroller RNC in die Basisstationen B verlagert, d. h. in den Basisstationen B werden zusätzliche Speicher BS eingerichtet, die die Datenpakete und die Statusinformation der Datenübertragung speichern. Auf diese Weise wird Zeit gespart, da bei der Steuerung der Datenübertragung der Übertragungsweg zwischen dem Kontroller RNC und den Basisstationen B entfällt. Auch mit diesem neuen Speicher BS in den Basisstationen B erfolgt der Hard-Handover wie zuvor beschrieben. Vorschläge dazu finden sich z. B. in einem Beitrag von Motorola anläßlich des TSG-RAN Working Group 2 meeting #18/00 in Edinburgh, vom 15. Bis 19. Januar 2000, mit dem Titel "Fast Cell Selection and Handovers in HSDPA" (R2-A010017). Wie oben erläutert, wird die Datenübertragung wieder aufgenommen, wenn die neue Basisstation B über den Status der Datenübertragung informiert wurde, d.h. wenn der Speicherinhalt der alten Basisstation B an die neue Basisstation B übermittelt wurde. Diese Synchronisation der Statusinformation der Datenübertragung zwischen alter und neuer Basisstation B erfolgt dabei entweder über die Verbindungen Iub des Kontrollers RNC, gegebenfalls auch noch über die weitere Schittstelle Iur und/oder durch das Teilnehmergerät UE über die Funkschnittstelle. Die Grenzen für HSDPA ergeben sich also durch die endliche Zeit, die für das Übertragen des Speicherinhalts der alten Basisstation B (Datenpakete und Sendezustand der Datenpakete) an den Speicher BS der neuen Basisstation B benötigt wird.

In der EP0695053A wird für ein zellulares Computergerät (cellular computer device) ein Handover von einer alten Basisstation zu einer neuen Basisstation beschrieben. Der Protokollstatus der Datenübertragung wird der neuen Basisstation entweder durch eine entsprechende Information des zellularen Computergeräts, eine Information der alten Basisstation oder eine Kombination beider Informationen während des Handovers mitgeteilt.

In der DE 100 17 062 A1 wird ein Verfahren zum Betreiben eines Mobilfunknetzes beschrieben, bei dem bei einem Verbindungswechsel einer Mobilstation von einer ersten Basisstation zu einer zweiten Basisstation übertragungsspezifische Informationen von einer ersten übergeordneten Netzwerkeinheit an eine zweite übergeordnete Netzwerkeinheit übertragen werden, um eine Übertragung von Dateneinheiten an die Mobilstation nach dem Verbindungswechsel vom aktuellen Zustand aus fortzusetzen.

Der Erfindung liegt daher die Aufgabe zugrunde, ein Verfahren anzugeben, mit dem bei einer Änderung der dem Teilnehmergerät UE zugeordneten Zelle (Hard-Handover oder FCS) eine höhere Datenrate gewährleistet werden kann, als dies bisher möglich ist.

Diese Aufgabe wird mit dem Verfahren gemäß Anspruch 1 und dem Mobilfunksystem gemäß Anspruch 7 gelöst.

Vorteilhafte Aus- und Weiterbildungen der Erfindung sind Gegenstand der abhängigen Ansprüche.

Beim erfindungsgemäßen Verfahren zur Übertragung von Datenpaketen von einer ersten Sendestation zu einer mobilen Empfangsstation in einem Mobilfunksystem, wird eine Verbindung zwischen der ersten Sendestation und der Empfangsstation über eine zweite Sendestation aufgebaut und erste Datenpakete von der ersten Sendestation an die zweite Sendestation zum Übertragen an die Empfangsstation übermittelt. Eine Information über diejenigen ersten Datenpakete, die nicht erfolgreich über die zweite Sendestation an die Empfangsstation übertragen wurden, wird in der zweiten Sendestation und/oder der Empfangsstation ermittelt. Diese Information gibt somit eine Statusinformation der Datenübertragung an. Es erfolgt eine Übergabe der Verbindung an eine dritte Sendestation und nach der Übergabe der Verbindung werden zweite Datenpakete von der ersten Sendestation an die dritte Sendestation übermittelt und von dort an die Empfangsstation übertragen. Die Information über diejenigen ersten Datenpakete, die nicht erfolgreich über die zweite Sendestation an die Empfangsstation übertragen wurden, wird erst nach der Übertragung der zweiten Datenpakete an die erste Sendestation und/oder die dritte Sendestation übermittelt. Dieses Verfahren ermöglicht es, bei einem Verbindungswechsel, wie er aufgrund eines Handovers oder einer Fast Cell Selection erfolgt, sofort Datenpakete zu übertragen, ohne daß die dritte Sendestation und/oder die erste Sendestation über Erfolg oder Mißerfolg zuvor übertragener Datenpakete Kenntnis hat, d. h. über die von der zweiten Sendestation und/oder der Empfangsstation ermittelte Statusinformation der Datenübertragung verfügt. Das erfindungsgemäße Verfahren kann höhere Datenraten bei einem Verbindungswechsel sicherstellen, als dies möglich ist, wenn vor der Fortsetzung der Datenübertragung zunächst die Statusinformation der Datenübertragung von der zweiten Sendestation an die dritte Sendestation und/oder die erste Sendestation übermittelt wird. Insbesondere ist dieses Verfahren für Datenübertragungen mit hohen Datenraten wie High Speed Downlink Packet Access (HSDPA) geeignet.

In einer ersten Ausführungsform der Erfindung erfolgt die Durchführung des Verfahrens in einem zellularen Mobilfunksystem. Hier ist die erste Sendestation ein Kontroller, die zweite und dritte Sendestation sind Basisstationen und die Empfangsstation ist ein Teilnehmergerät.

Eine zweite Ausführungsform der Erfindung führt das Verfahren in einem Ad-hoc-Netz (auch selbstorganisierendes Netz genannt) durch. In einem Ad-hoc-Netz, d. h. einem Kommunikationsnetz, das auch ausschließlich durch mobile Stationen gebildet werden kann, ist die erste Sendestation eine mobile Station oder eine Zugangsstation. Unter einer Zugangsstation ist dabei eine feste Station zu verstehen, die den Zugang ins Festnetz ermöglicht. Die zweite und dritte Sendestation sowie die Empfangsstation sind mobile Stationen.

Vorzugsweise stimmen die zweiten Datenpakete mit keinem der ersten Datenpakete überein. Auf diese Weise wird sichergestellt, daß keine Datenpakete mehrmals übertragen werden. Dies erhöht nochmals die Datenrate während des Verbindungswechsels.

In einer alternativen Ausgestaltung der Erfindung stimmen die zweiten Datenpakete mit denjenigen der ersten Datenpakete überein, die von der ersten Sendestation zwar an die zweite Sendestation übermittelt, aber nicht mehr vor der Übergabe der Verbindung von der zweiten Sendestation an die Empfangsstation übertragen wurden. Durch diese Ausgestaltung werden sofort bei der Übergabe der Verbindung Datenpakete übertragen, die das Teilnehmergerät schon während der Datenübertragung durch die erste Sendestation hätte erhalten sollen. Diese Datenpakete erreichen das Teilnehmergerät nun erstmalig und noch bevor die dritte Sendestation den Status der Datenübertragung kennt. Die Datenrate wird so wiederum gesteigert.

Zweckmäßig ist es, diejenigen der ersten Datenpakete, die von der ersten Sendestation zwar an die zweite Sendestation übermittelt, aber nicht mehr vor der Übergabe der Verbindung von der zweiten Sendestation an die Empfangsstation übertragen wurden, anhand der voraussichtlichen Übertragungsdauer von der ersten Sendestation zur zweiten Sendestation oder zur Empfangsstation zu ermitteln. Anhand der voraussichtlichen Übertragungsdauer, d. h. anhand der Zeit, die ein Datenpaket benötigt, um nach Absenden durch die erste Sendestation von der zweiten Sendestation oder von der Empfangsstation empfangen zu werden, kann die erste Sendestation angeben, welche Datenpakete die Empfangsstation niemals erreichen konnten, obwohl sie vor der Durchführung des Verbindungswechsels von der ersten Sendestation abgeschickt wurden. Diese Datenpakete können dann von der dritten Sendestation übertragen werden, ohne daß diese Sendestation über eine Statusinformation der Datenübertragung verfügt.

Das Mobilfunksystem ist mit den für die Durchführung des Verfahrens notwendigen Komponenten ausgestattet.

Die Erfindung wird im folgenden anhand von in den Figuren dargestellten Ausführungsbeispielen näher erläutert. Es zeigen:
- Figur 1: ein UMTS gemäß dem Stand der Technik,
- Figur 2: einen Ausschnitt eines erfindungsgemäßen zellularen Mobilfunksystems,
- Figuren 3 bis 7: den Ablauf der Datenübertragung bei einem Verbindungswechsel,
- Figur 8: ein anderes Ausführungsbeispiel des erfindungsgemäßen Mobilfunksystems, in Form eines Ad-hoc-Netzes.

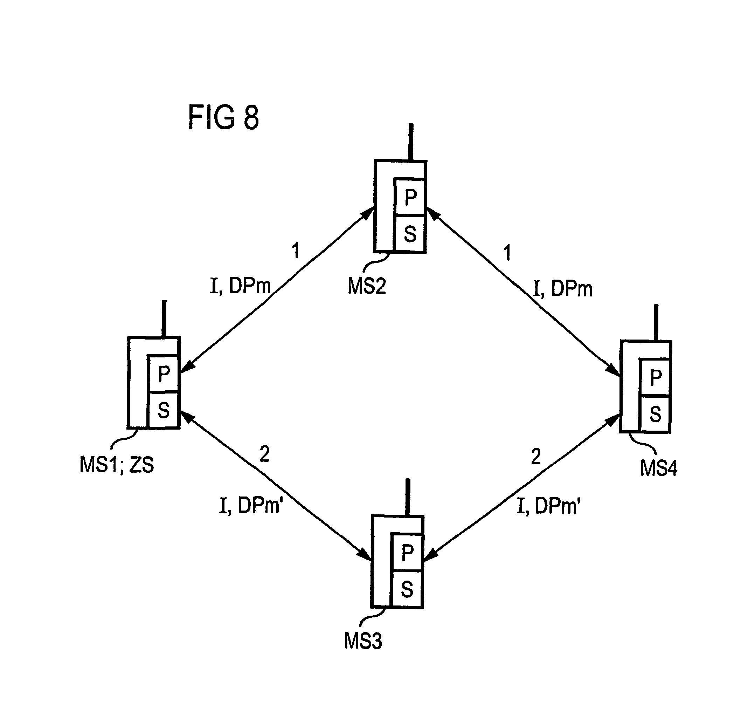

Die Erfindung wird im folgenden anhand eines UMTS beschrieben. Selbstverständlich läßt sich die Erfindung auch für andere Mobilfunksysteme verwenden. Insbesondere gilt dies für GSM, Ad-hoc-Netze (siehe Figur 8) und Mobilfunksysteme der 4. Generation.

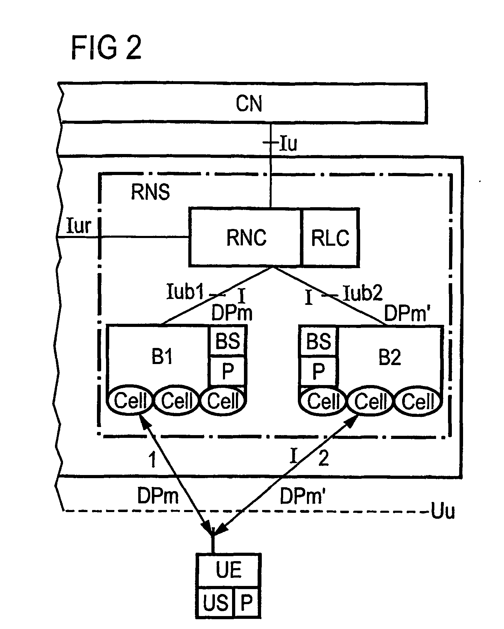

Gleiche Bezugszeichen in den Figuren 1 und 2 bezeichnen gleiche Gegenstände.

In dem in Figur 2 dargestellten Ausschnitt eines UMTS sind eine erste, eine zweite und eine dritte Sendestation durch einen Kontroller RNC, eine erste Basisstation B1 und eine zweite Basisstation B2 dargestellt. Es besteht eine Verbindung zwischen einer Empfangsstation in Form eines Teilnehmergeräts UE und der ersten Basisstation B1 über einen Übertragungsweg 1. Über diese Verbindung werden erste Datenpakete DPm aus dem Festnetz CN mittels der Schnittstellen Iu und Iub1 an das Teilnehmergerät UE übertragen. Der Kontroller RNC besitzt einen Speicher RS. Die Basisstationen B1, B2 mit Speichern BS und das Teilnehmergerät UE mit Speicher US besitzen einen Prozessor P, mit dem die unten beschriebene Information I ermittelt werden kann. Die Speicher RS, BS, US dienen der Speicherung von Datenpaketen und von Informationen über den Status der Datenübertragung jedes Datenpakets.

In der ersten Basisstation B1 werden die vom Kontroller RNC übermittelten Datenpakete DPm in dem Speicher BS gespeichert und von dort an das Teilnehmergerät UE übertragen. In der ersten Basisstation B1 und im Teilnehmergerät UE wird dabei mittels des Prozessors P die Information I ermittelt, die angibt, welche der ersten Datenpakete DPm nicht erfolgreich über die erste Basisstation B1 an das Teilnehmergerät UE übertragen wurden. Diese Information I gibt somit an, für welche der ersten Datenpakete DPm ein NACK-Signal von dem Teilnehmergerät UE an die erste Basisstation B1 gesendet wurde und welche der ersten Datenpakete DPm zwar vom Kontroller RNC an die erste Basisstation B1 übertragen, aber noch nicht an das Teilnehmergerät UE gesendet wurden. Der Kontroller RNC kann anhand des Inhalts seines Speichers RS feststellen, welche Datenpakete er bereits an die erste Basisstation B1 übermittelt hat und welche Datenpakete von ihm noch nicht an die erste Basisstation B1 übermittelt wurden.

Sinkt die Verbindungsqualität der Verbindung über den Übertragungsweg 1 unter ein Mindestmaß, während gleichzeitig für einen potentiellen Übertragungsweg 2 über die zweite Basisstation B2 eine bessere Verbindungsqualität möglich ist, so erfolgt eine Änderung des Übertragungswegs, d. h. es erfolgt eine Übergabe der Verbindung von der ersten Basisstation B1 an die zweite Basisstation B2. Unmittelbar nach diesem Handover werden bereits zweite Datenpakete DPm' vom Kontroller RNC an die zweite Basisstation B2 übermittelt und von dort an das Teilnehmergerät UE übertragen. Diese zweiten Datenpakete DPm' wurden zuvor nicht an die erste Basisstation B1 übermittelt. Dies kann der Kontroller RNC dadurch sicherstellen, daß er aufgrund des Übertragungsstatus seines Speichers RS nur zweite Datenpakete DPm' mit Identifizierungsnummern m' aus seinem Speicher RS übermittelt, die er zuvor nicht an die erste Basisstation B1 übermittelt hat. Auf diese Weise wird unmittelbar nach dem Handover bereits wieder eine Datenübertragung an das Teilnehmergerät UE ermöglicht. Erst nach bzw. während der Übertragung dieser zweiten Datenpakete DPm' an das Teilnehmergerät UE wird die zweite Basisstation B2 über diejenigen der ersten Datenpakete DPm informiert, die zuvor erfolglos über die erste Basisstation B1 an das Teilnehmergerät UE übertragen wurden, d. h. für die das Teilnehmergerät UE ein NACK-Signal an die erste Basisstation B1 gesendet hat, oder die in der ersten Basisstation B1 gespeichert, aber noch nicht an das Teilnehmergerät UE übertragen wurden. Diese Information I wird dazu vom Teilnehmergerät UE über die Luftschnittstelle und von der ersten Basisstation B1 über die Schnittstellen Iub1 und Iub2 an die zweite Basisstation B2 übermittelt. Nach Übermittlung der Information I und der gleichzeitigen Übertragung der durch die Information I bezeichneten Datenpakete über die Schnittstellen Iub1 und Iub2, wird die Datenübertragung dieser Datenpakete nachgeholt und das Mobilfunksystem setzt die reguläre Datenübertragung fort.

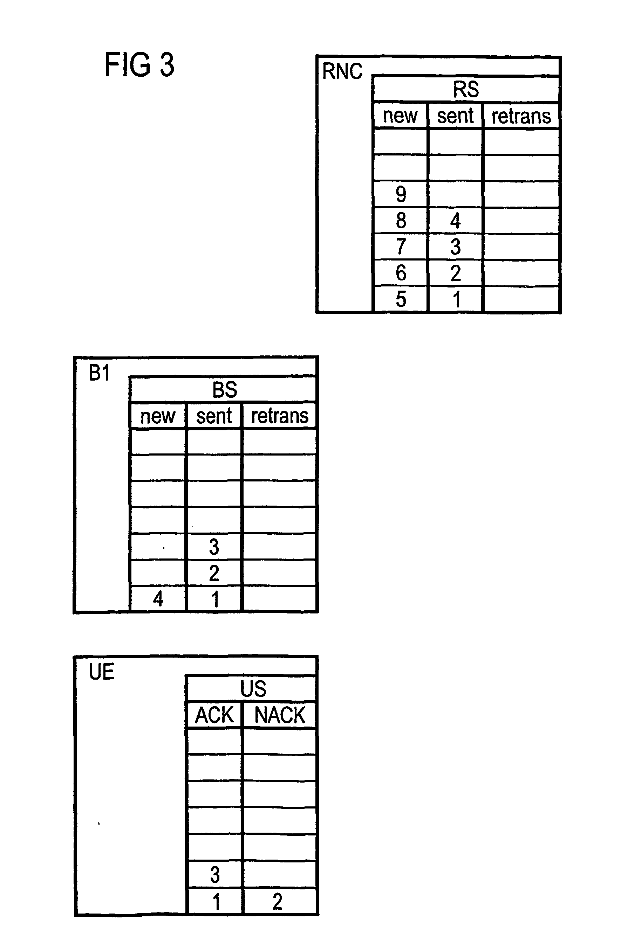

In den Figuren 3 bis 7 ist der zeitliche Ablauf der Datenübertragung vor und kurz nach der Verbindungsübergabe von der ersten Basisstation B1 an die zweite Basisstation B2 beschrieben. Die Tabellen zeigen den Inhalt der Speicher RS, BS, US der beteiligten Stationen zu unterschiedlichen Zeitpunkten. In der ersten Spalte (new) des Speichers RS des Kontrollers RNC sind Identifizierungsnummern von denjenigen Datenpaketen aufgeführt, die der Kontroller RNC aus dem Festnetz CN erhalten hat, aber noch nicht an den Speicher BS der ersten Basisstation B1 bzw. der zweiten Basisstation B2 übermittelt hat. In jeweils der ersten Spalte (new) der Speicher BS der ersten Basisstation B1 und der zweiten Basisstation B2 sind Identifizierungsnummern von denjenigen Datenpaketen aufgeführt, die vom Kontroller RNC empfangen, aber noch nicht an das Teilnehmergerät UE gesendet wurden. In jeweils der zweiten Spalte (sent) der Speicher RS, BS sind die Identifizierungsnummern bereits gesendeter Datenpakete angegeben, während in der dritten Spalte (retrans) Identifizierungsnummern von Datenpakten stehen, die nach einem NACK-Signal erneut übertragen wurden. Im Speicher US des Teilnehmergeräts UE gibt die erste Spalte (ACK) an, welche Datenpakete erfolgreich dekodiert wurden, während in der zweiten Spalte (NACK) diejenigen Identifizierungsnummern stehen, deren zugehörige Datenpakete nicht erfolgreich dekodiert werden konnten und für die eine erneute Übertragung angefordert wird. Im folgenden bedeutet die Angabe "Datenpaket n" das Datenpaket mit der Identifizierungsnummer n.

Gemäß Figur 3 übermittelt der Kontroller RNC während der Verbindung über den Übertragungsweg 1 zunächst Datenpakete 1 bis 4 (sent) als erste Datenpakete DPm (vgl. Figur 2) an die erste Basisstation B1. Weitere Datenpakete 5 bis 9 (new) befinden sich noch in der Warteschlange und warten auf ihre Übermittlung. Die erste Basisstation B1 hat bereits Datenpakete 1 bis 3 übertragen (sent), während Datenpaket 4 zwar empfangen aber noch nicht an das Teilnehmergerät UE übertragen wurde. Das Teilnehmergerät UE hat Datenpakete 1 und 3 (ACK) erfolgreich dekodiert, aber Datenpaket 2 wurde fehlerhaft empfangen (NACK) und wird erneut angefordert.

Zur besseren Übersicht ist in den folgenden Figuren nicht immer eine weitere Übertragung neuer Datenpakete parallel zur Aktualisierung der Speicherinhalte dargestellt. Diese parallele Übertragung ist jedoch möglich.

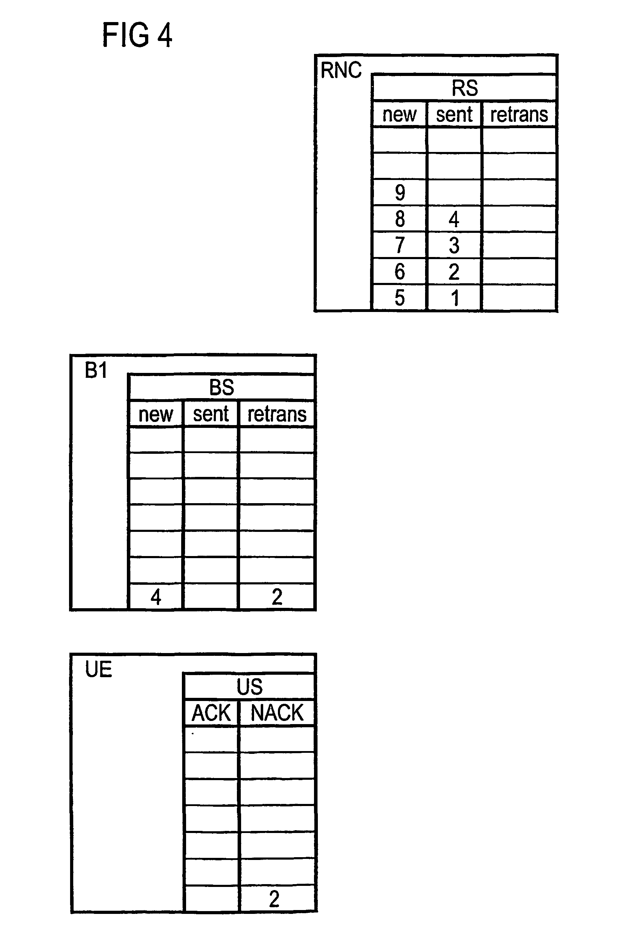

In Figur 4 bleibt der Speicher RS des Kontrollers RNC unverändert. Nach der Übertragung von ACK-Signalen und NACK-Signalen vom Teilnehmergerät UE zur Basisstation B1 steht weiterhin das Datenpaket 4 in der ersten Basisstation B1 zur Übertragung bereit, wurde aber noch nicht gesendet. Die Basisstation B1 ist nun darüber informiert, daß das Datenpaket 2 erneut übertragen werden muß (retrans). Vom Teilnehmergerät UE wurde dieses Datenpaket 2 noch nicht erfolgreich empfangen, so daß für dieses Datenpaket weiterhin der Status "NACK" gespeichert bleibt. Die Information über den Status "ACK" der Datenpakete 1 und 3 wird nicht mehr benötigt und wurde inzwischen gelöscht.

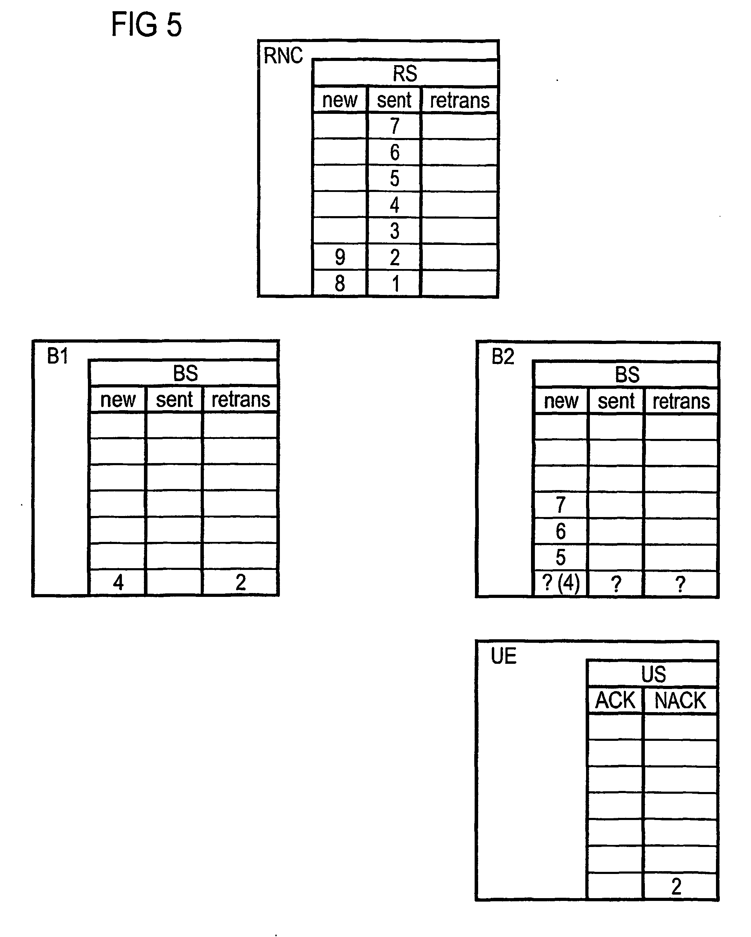

Erfolgt in diesem Zustand der Handover, so ergibt sich die in Figur 5 dargestellte Situation. Die Speicher der ersten Basisstation B1 und des Teilnehmergeräts UE bleiben unverändert. Vom Kontroller RNC werden jedoch bereits neue Datenpakete 5 bis 7 (sent) als zweite Datenpakete DPm' (vgl. Figur 2) an die zweite Basisstation B2 übermittelt (siehe dort in der ersten Spalte). Die Fragezeichen in den Spalten der zweiten Basisstation B2 verdeutlichen, daß die zweite Basisstation B2 zu diesem Zeitpunkt über keinerlei Information über den Ablauf der bisherigen Übertragung (Übertragungsweg 1 in Figur 2) verfügt.

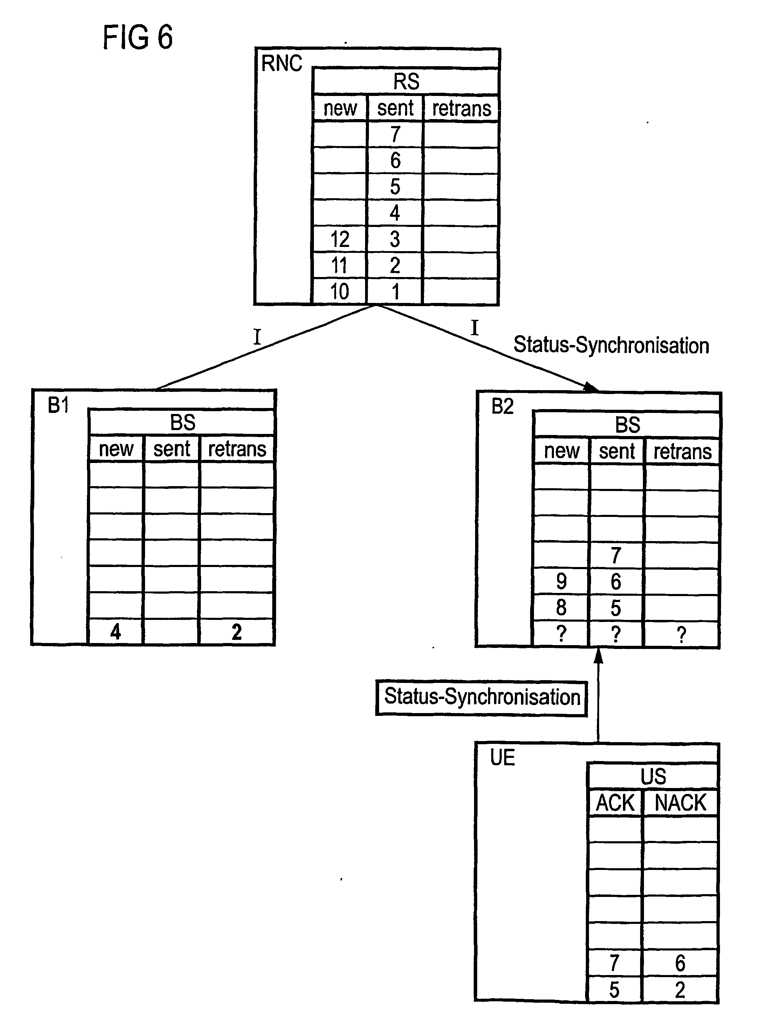

In Figur 6 erfolgt nun bereits eine Übertragung der Datenpakete 5 bis 7 (sent) durch die zweite Basisstation B2, während gleichzeitig oder im Anschluß an diese Übertragung die Speicher der ersten Basisstation B1 und des Teilnehmergeräts UE mit der zweiten Basisstation B2 abgeglichen werden (Status-Synchronisation). Es werden bei der Status-Synchronisation sowohl die im Speicher BS der ersten Basisstation B1 gespeicherte Statusinformation der Datenübertragung als Information I abgeglichen als auch die nötigen Datenpakete übertragen. In diesem Beispiel werden also die Datenpakete 2 und 4 sowie die zugehörige Statusinformation (Information I) bei der Status-Synchronisation übertragen. Der Speicher des Teilnehmergeräts UE enthält dabei natürlich bereits Informationen über den Übertragungserfolg der Datenpakete 5 bis 7, zusätzlich zu der dort immer noch gespeicherten Statusinformation des Datenpakets 2.

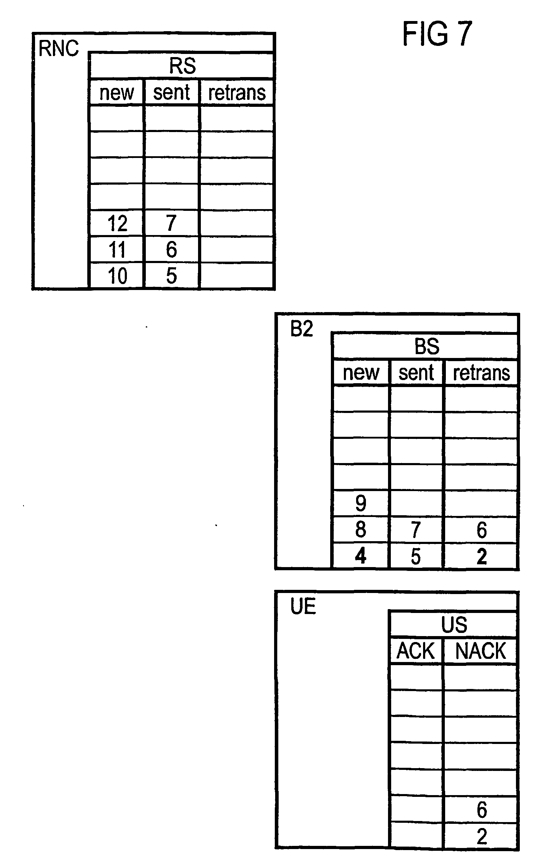

Nach der Aktualisierung des Speichers der zweiten Basisstation B2 findet sich dort entsprechend der Speicherzustand der ersten Basisstation B1 (siehe Figur 7), d. h. das Datenpaket 4 in der ersten Spalte und das Datenpaket 2 in der dritten Spalte. Ebenso findet sich in der dritten Spalte das Datenpaket 6 für das das Teilnehmergerät UE eine erneute Übertragung angefordert hat.

Nach der Erfindung werden also zunächst erste Datenpakete 5 bis 7 über die zweite Basisstation B2 übertragen, bevor die Status-Synchronisation erfolgt. Im Vergleich dazu würde gemäß dem Stand der Technik die Übertragung der Datenpakete 5 bis 7 erst nach der Status-Synchronisation erfolgen.

Die erste Basisstation B1 und die zweite Basisstation B2 sind in dem dargestellten Ausführungsbeispiel nur einem einzigen Kontroller RNC zugeordnet. Das erfindungsgemäße Verfahren ist jedoch auch auf Situationen übertragbar, bei denen die erste Basisstation B1 und die zweite Basisstation B2 zu verschiedenen Kontrollern RNC gehören (vgl. Figur 2). In diesem Fall wird bei der Status-Synchronisation zusätzlich die Schnittstelle Iur benötigt.

In einem weiteren Ausführungsbeispiel kennt der Kontroller RNC die voraussichtliche Übertragungszeit von Datenpaketen bis zur ersten Basisstation B1 oder bis zum Teilnehmergerät UE. So kann er berechnen oder schätzen, ob das Datenpaket 4 vor dem Handover an das Teilnehmergerät UE hätte übertragen werden können. Ergibt sich, daß eine Übertragung, wie für das Datenpaket 4 aus Figur 5 ersichtlich, nicht vor dem Handover erfolgen konnte, so kann der Kontroller RNC selbstverständlich das Datenpaket 4 bereits mit den Datenpaketen 5 bis 7 übermitteln und erhöht so zusätzlich die Datenrate während des Verbindungswechsels. Dieser Fall ist durch die in Klammern gesetzte Ziffer 4 im Speicher BS der zweiten Basisstation B2 dargestellt. Die voraussichtliche Übertragungszeit kann der Kontroller RNC aus der maximalen Datenrate der Übertragung der ersten Datenpakte DPm von der ersten Basisstation B1 an das Teilnehmergerät UE und aus der Verzögerung in der Übermittlung der ersten Datenpakete DPm von dem Kontroller RNC zur ersten Basisstation B1 bestimmen. Die Verzögerung in der Übermittlung zur ersten Basisstation B1 ist dem Kontroller RNC durch die bisherige Übermittlung bekannt und kann etwa 10 bis 100 Millisekunden betragen. Große Verzögerungszeiten werden dabei insbesondere dann erreicht, wenn die Schnittstelle Iur zur Übermittlung von Datenpaketen benötigt wird, d. h. wenn verschiedene Kontroller RNC an der Datenübertragung beteiligt sind. Ergibt sich beispielsweise eine voraussichtliche Übertragungszeit von 100 Millisekunden, so kann der Kontroller RNC davon ausgehen, daß Datenpakete, die er 80 Millisekunden (100 Millisekunden abzüglich einer Sicherheitsspanne von in diesem Beispiel 20 Millisekunden) vor dem Handover an die erste Basisstation B1 übermittelt hat, nicht mehr an das Teilnehmergerät UE übertragen werden konnten. Diese Datenpakete kann der Kontroller RNC sofort zusammen mit noch nicht an die erste Basisstation B1 übermittelten Datenpaketen an die zweite Basisstation B2 übermitteln.

Auch in einem Ad-hoc-Netz, wie es in Figur 8 dargestellt ist, kann das erfindungsgemäße Verfahren angewendet werden. In diesem Fall werden die ersten Datenpakete DPm entweder von einer ersten mobilen Station MS1 oder einer Zugangsstation ZS an eine zweite mobile Station MS2 übermittelt und von dort an eine weitere mobile Station MS4 als Empfangsstation übertragen. Die zweiten Datenpakte DPm' werden an eine dritte mobile Station MS3 übermittelt und von dort an die weitere mobile Station MS4 übertragen. Bei einer Zugangsstation handelt es sich dabei um eine feste Station, die - analog zum Kontroller RNC im UMTS - den Teilnehmerstationen eines Ad-hoc-Netzes den Zugang ins Festnetz CN ermöglicht. Mobile Stationen MSi haben jeweils einen Speicher S für Datenpakete und Statusinformationen der Datenübertragung und einen Prozessor P zur Ermittlung der Information I. Bis auf andere Bezeichnung für die Sendestationen und die Empfangsstation ist der Ablauf des erfindungsgemäßen Verfahrens in einem Ad-hoc-Netz, wie es in Figur 8. dargestellt ist, identisch zu dem zuvor anhand eines zellularen Systems beschriebenen Ausführungsbeispiel (Figuren 2 bis 7).

## Patentansprüche

1. Verfahren zur Übertragung von Datenpaketen von einer ersten Sendestation (RNC; MS1, ZS) zu einer mobilen Empfangsstation (UE; MS4) in einem Mobilfunksystem, bei dem
- eine Verbindung zwischen der ersten Sendestation (RNC; MS1, ZS) und der Empfangsstation (UE; MS4) über eine zweite Sendestation (B1; MS2) aufgebaut wird,
- erste Datenpakete (DPm) von der ersten Sendestation (RNC; MS1, ZS) an die zweite Sendestation (B1; MS2) zum Übertragen an die Empfangsstation (UE; MS4) übermittelt werden,
- eine Information (I) über diejenigen ersten Datenpakete (DPm), die nicht erfolgreich über die zweite Sendestation (B1; MS2) an die Empfangsstation (UE; MS4) übertragen wurden, in der zweiten Sendestation (B1; MS2) und/oder der Empfangsstation (UE; MS4) ermittelt wird,
- eine Übergabe der Verbindung an eine dritte Sendestation (B2; MS3) erfolgt,
- nach der Übergabe der Verbindung zweite Datenpakete (DPm') von der ersten Sendestation (RNC; MS1, ZS) an die dritte Sendestation (B2; MS3) übermittelt und von dort an die Empfangsstation (UE; MS4) übertragen werden, **dadurch gekennzeichnet dass**
- die Information (I) erst nach der Übertragung der zweiten Datenpakete (DPm') an die erste Sendestation (RNC; MS1, ZS) und/oder die dritte Sendestation (B2; MS3) übermittelt wird.

2. Verfahren nach Anspruch 1, bei dem
- die Durchführung des Verfahrens in einem zellularen Mobilfunksystem erfolgt,
- die erste Sendestation ein Kontroller (RNC) ist,
- die zweite und dritte Sendestation Basisstationen (B1, B2) sind
- und die Empfangsstation ein Teilnehmergerät (UE) ist.

3. Verfahren nach Anspruch 1, bei dem
- die Durchführung des Verfahrens in einem Ad-hoc-Netz erfolgt,
- die erste Sendestation eine mobile Station (MS1) oder eine Zugangsstation (ZS) ist
- und die zweite und dritte Sendestation sowie die Empfangsstation mobile Stationen (MS2, MS3, MS4) sind.

4. Verfahren nach einem der vorstehenden Ansprüche, bei dem die zweiten Datenpakete (DPm') mit keinem der ersten Datenpakete (DPm) übereinstimmen.

5. Verfahren nach Ansprüchen 1, 2 oder 3, bei dem
- die zweiten Datenpakete (DPm') mit denjenigen der ersten Datenpakete (DPm) übereinstimmen, die von der ersten Sendestation (RNC; MS1, ZS) zwar an die zweite Sendestation (B1; MS2) übermittelt, aber nicht mehr vor der Übergabe der Verbindung von der zweiten Sendestation (B1; MS2) an die Empfangsstation (UE; MS4) übertragen wurden.

6. Verfahren nach Anspruch 5, bei dem
- die zweiten Datenpakete (DPm') anhand der voraussichtlichen Übertragungsdauer von der ersten Sendestation (RNC; MS1, ZS) zur zweiten Sendestation (B1; MS2) oder zur Empfangsstation (UE; MS4) ermittelt werden.

7. Mobilfunksystem mit einer ersten, einer zweiten und einer dritten Sendestation (RNC, B1, B2; MS1, MS2, MS3, ZS) und einer mobilen Empfangsstation (UE; MS4)
- dessen erste Sendestation (RNC; MS1, ZS) und zweite Sendestation (B1; MS2) so ausgebildet sind, daß erste Datenpakete (DPm) einer Verbindung von der ersten Sendestation (RNC; MS1) an die zweite Sendestation (B1; MS2) übertragbar sind,
- dessen zweite Sendestation (B1; MS2) und Empfangsstation (UE; MS4) derart ausgebildet sind, daß eine Information (I) über diejenigen ersten Datenpakete (DPm), die nicht erfolgreich über die zweite Sendestation (B1; MS2) an die Empfangsstation (UE; MS4) übertragen wurden, in der zweiten Sendestation (B2; MS3) und/oder der Empfangsstation (UE; MS4) ermittelt wird, **dadurch gekennzeichnet dass** es
- das Mittel aufweist zum Übermitteln der Information (I) an die erste Sendestation (RNC; MS1, ZS) und/oder eine dritte Sendestation (B2; MS3), erst nachdem eine Übergabe der Verbindung an die dritte Sendestation (B2; MS3) erfolgt ist und bereits zweite Datenpakete (DPm') von der ersten Sendestation (RNC; MS1, ZS) an die dritte Sendestation (B2; MS3) übermittelt wurden und von dort an die Empfangsstation (UE; MS4) übertragen wurden.

## Claims

1. Method for the transmission of data packets from a first transmission station (RNC; MS1, ZS) to a mobile receiver station (UE; MS4) in a mobile radio system, in which
- a connection between the first transmission station (RNC; MS1, ZS) and the receiver station (UE; MS4) is established via a second transmission station (B1; MS2),
- first data packets (DPm) are transmitted from the first transmission station (RNC; MS1, ZS) to the second transmission station (B1; MS2) for transmission to the receiver station (UE; MS4),
- information (I) about any first data packets (DPm) which have not been successfully transmitted via the second transmission station (B1; MS2) to the receiver station (UE; MS4) is determined in the second transmission station (B1; MS2) and/or in the receiver station (UE; MS4),
- a handover of the connection to a third transmission station (B2; MS3) takes place,
- after the handover of the connection, second data packets (DPm') are sent by the first transmission station (RNC; MS1, ZS) to the third transmission station (B2; MS3) and transmitted from there to the receiver station (UE; MS4), **characterised in that**
- the information (I) is sent only after the transmission of the second data packets (DPm') to the first transmission station (RNC; MS1, ZS) and/or the third transmission station (B2; MS3).

2. Method according to Claim 1, in which
- the method is applied in a cellular mobile radio system,
- the first transmission station is a controller (RNC),
- the second and third transmission stations are base stations (B1, B2)
- and the receiver station is a user equipment (UE).

3. Method according to Claim 1, in which
- the method is applied in an ad-hoc network,
- the first transmission station is a mobile station (MS1) or an access station (ZS)
- and the second and third transmission stations and the receiver station are mobile stations (MS2, MS3, MS4).

4. Method according to one of the preceding Claims, in which the second data packets (DPm') match none of the first data packets (DPm).

5. Method according to Claims 1, 2 or 3, in which
- the second data packets (DPm') match those of the first data packets (DPm) which were in fact transferred, by the first transmission station (RNC; MS1, ZS) to the second transmission station (B1; MS2), but were not transmitted by the second transmission station (B1; MS2) to the receiver station (UE; MS4) before the handover of the connection.

6. Method according to Claim 5, in which
- the second data packets (DPm') are determined with the aid of the probable transmission time from the first transmission station (RNC; MS1, ZS) to the second transmission station (B1; MS2) or to the receiver station (UE; MS4).

7. Mobile radio system with a first, a second and a third transmission station (RNC, B1, B2; MS1, MS2, MS3, ZS) and a mobile receiver station (UE; MS4)
- the first transmission station (RNC; MS1, ZS) and second transmission station (B1; MS2) of which are so designed that first data packets (DPm) of a connection can be transmitted from the first transmission station (RNC; MS1) to the second transmission station (B1; MS2),
- the second transmission station (B1; MS2) and receiver station (UE; MS4) of which are so designed that information (I) about any first data packets (DPm) which were not successfully transmitted via the second transmission station (B1; MS2) to the receiver station (UE; MS4) is determined in the second transmission station (B2; MS3) and/or in the receiver station (UE; MS4),
**characterised in that**
- it has the means for sending the information (I) to the first transmission station (RNC; MS1, ZS) and/or a third transmission station (B2; MS3), only after a handover of the connection to the third transmission station (B2; MS3) has taken place and second data packets (DPm') have already been sent by the first transmission station (RNC; MS1, ZS) to the third transmission station (B2; MS3) and transmitted from there to the receiver station (UE; MS4).

## Revendications

1. Procédé pour la transmission de paquets de données d'une première station émettrice (RNC ; MS1, ZS) à une station réceptrice mobile (UE ; MS4) dans un système de téléphonie mobile, dans lequel
- une liaison est établie entre la première station émettrice (RNC ; MS1, ZS) et la station réceptrice (UE; MS4) au moyen d'une seconde station émettrice (B1 ; MS2),
- des premiers paquets de données (DPm) sont transmis de la première station émettrice (RNC ; MS1, ZS) à la seconde station émettrice (B1 ; MS2) pour la transmission à la station réceptrice (UE ; MS4),
- une information (1) sur les premiers paquets de données (DPm) qui n'ont pas été transmis avec succès via la seconde station émettrice (B1 ; MS2) à la station réceptrice (UE ; MS4), est déterminée dans la seconde station émettrice (B1 ; MS2) et/ou la station réceptrice (UE ; MS4),
- un transfert de la liaison à une troisième station émettrice (BS2 ; MS3) intervient,
- après le transfert de la liaison, des seconds paquets de données (DPm') sont transmis de la première station émettrice (RNC; MS1, ZS) à la troisième station émettrice (B2 ; MS3) et de là à la station réceptrice (UE ; MS4), **caractérisé en ce que**
- l'information (1) est transmise seulement après la transmission des seconds paquets de données (DPm') à la première station émettrice (RNC; MS1, ZS) et/ou la troisième station émettrice (B2 ; MS3).

2. Procédé selon la revendication 1, dans lequel
- la mise en oeuvre du procédé intervient dans un système cellulaire de téléphonie mobile,
- la première station émettrice est un contrôleur (RNC),
- la seconde et la troisième stations émettrices sont des stations de base (B1, B2)
- et la station émettrice est un appareil d'abonné (UE).

3. Procédé selon la revendication 1, dans lequel
- la mise en oeuvre du procédé intervient dans un réseau ad-hoc,
- la première station émettrice est une station mobile (MS1) ou une station d'accès (ZS)
- et la seconde et la troisième stations émettrices ainsi que la station réceptrice sont des stations mobiles (MS2, MS3, MS4).

4. Procédé selon l'une quelconque des revendications précédentes, dans lequel
- les seconds paquets de données (DPm') ne coïncident avec aucun des premiers paquets de données (DPm).

5. Procédé selon les revendications 1,2 ou 3, dans lequel
- les seconds paquets de données (DPm') coïncident avec ceux des premiers paquets de données (DPm), qui ont été certes transmis de la première station émettrice (RNC ; MS1, ZS) à la seconde station émettrice (B1, MS2), mais n'ont plus été transmis avant le transfert de la liaison de la seconde station émettrice (B1 ; MS2) à la station réceptrice (UE ; MS4).

6. Procédé selon la revendication 5, dans lequel
- les seconds paquets de données (DPm') sont déterminés à l'aide de la durée de transmission probable de la première station émettrice (RNC ; MS1, ZS) à la seconde station émettrice (B1 ; MS2) ou à la station réceptrice (UE ; MS4).

7. Système de téléphonie mobile comprenant une première, une seconde et une troisième stations émettrices (RNC, B1, B2 ; MS1, MS2, MS3, ZS) et une station réceptrice mobile (UE ; MS4)
- dont la première station émettrice (RNC ; MS1, ZS) et la seconde station émettrice (B1 ; MS2) sont conçues de telle sorte que des premiers paquets de données (DPm) d'une liaison peuvent être transmis de la première station émettrice (RNC ; MS1) à la seconde station émettrice (B1, MS2),
- dont la seconde station émettrice (B1 ; MS2) et la station réceptrice (UE ; MS4) sont conçues de telle sorte qu'une information (I) sur les premiers paquets de données (DPm), qui n'ont pas été transmis avec succès via la seconde station émettrice (B1 ; MS2) à la station réceptrice (UE ; MS4), est déterminée dans la seconde station émettrice (B2 ; MS3) et/ou la station réceptrice (UE ; MS4), **caractérisé en ce que**
- ils présentent des moyens pour la transmission de l'information (I) à la première station émettrice (RNC ; MS1, ZS) et/ou une troisième station émettrice (B2, MS3), seulement après qu'un transfert de la liaison à la troisième station émettrice (B2 ; MS3) est intervenu et des seconds paquets de données (DPm') ont déjà été transmis de la première station émettrice (RNC; MS1, ZS) à la troisième station émettrice (B2 ; MS3) et de là à la station réceptrice (UE ; MS4).
